# EUROPEAN PATENT APPLICATION

(11) **EP 2 007 066 A2**
(43) Date of publication of application: **24.12.2008**
(21) Application number: 06840823.6
(22) Date of filing: 31.12.2006
(51) Int. Cl.: H04L 12/24

(54) **A POLICY ENFORCEMENT POINT AND A LINKAGE METHOD AND SYSTEM FOR INTRUDE DETECTION SYSTEM**

(30) Priority: 06.04.2006 CN 200610034927
(71) Applicant: Huawei Technologies Co., Ltd., Longgang District, Shenzhen Guangdong 518129 (CN)
(72) Inventor: TENG, Xindong, Guangdong 518129 (CN)
(74) Representative: Karlsson, Leif Karl Gunnar
(86) International application number: PCT/CN2006/003793
(87) International publication number: WO 2007/115457

(57) **Abstract**

A policy enforcement point and a linkage method and system for intrude detection system, the method includes the lowing steps: the linkage connection is established between intrude detection system and policy enforcement point directly; the communication between the said policy enforcement point and the said intrude detection system is kept; the said intrude detection system detects intrusion action, and transmits the detection results to the said policy enforcement point, and the said policy enforcement point proceeds the corresponding operation according to the said detection results. The present invention improves the security defense ability of intrude detection system, and prevents false messages and other sorts or attacks effectively, and also realizes a higher efficiency linkage. The whole prevention defense ability of the security production is improved.

## Description

This application claims the priority of Chinese patent application No. 200610034927.2 filed on Apr 06, 2006 and titled "POLICY ENFORCEMENT POINT, AND METHOD FOR JOINT OPERATION OF POLICY ENFORCEMENT POINT AND INTRUDE DETECTION SYSTEM", which is incorporated herein by reference in its entirety.

### Fiend of the Invention

The present invention relates to the field of information network security technology, particularly to a method for joint operation of a network security device, and more particularly to a Policy Enforcement Point (PEP), and a method and system for joint operation of the PEP and an Intrude Detection System (IDS).

### Background of the Invention

A Policy Enforcement Point device is used for separating an internal network from an external network, and is crucial to network security. The PEP, also referred to as a policy client generally, is a network entity under the control of policy management. Typically, the PEP is located in a network node and executes a policy decision. The PEP, which may be a network device such as a router, a switch, a Virtual Private Network (VPN) gateway and a firewall, is adapted for executing a policy assigned by a Policy Decision Point (PDP), and sending information to the PDP to inform the PDP of a change on the network and the execution of the policy. The PEP can hardly analyze and check deeply details of numerous protocols due to its certain limitation such as rough check granularity; moreover, the PEP is characterized in its defense against the outside other than the inside, and can hardly check and prevent effectively an illegal action by an inner user and an penetrated attack. Therefore, it is necessary for the PEP to open a relevant interface to operate jointly with other security software, thereby constructing a secure network through a combination of various technologies. By the joint operation of a PEP and an IDS software, it is possible to take full advantage of the function of the IDS software to analyze and check a packet transmitted over the network in detail, so as to detect any possible abnormal circumstance and attack actions, and respond in real time through the PEP.

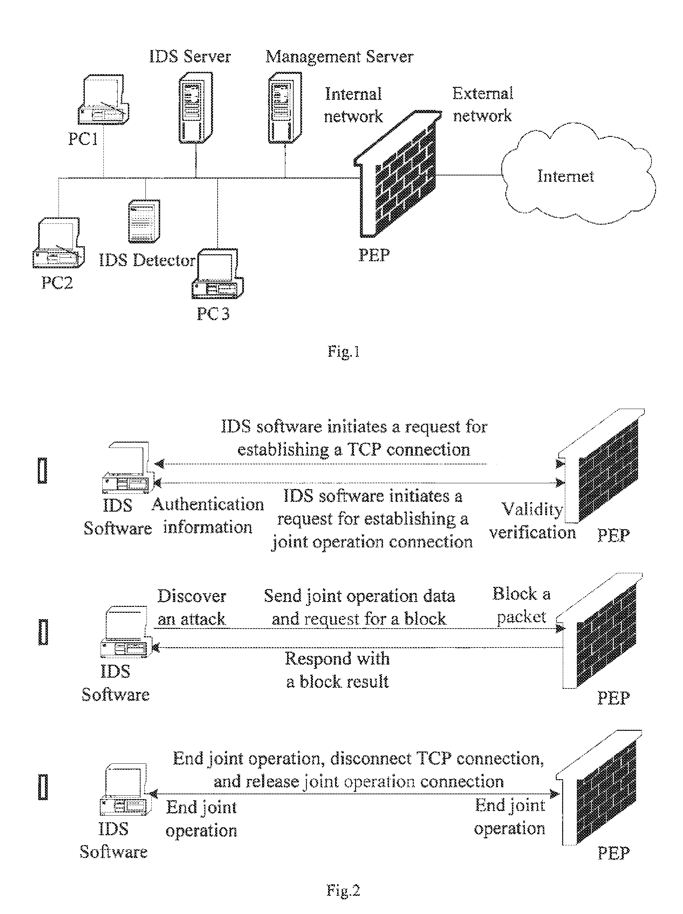

The networking mode of joint operation of a PEP and an IDS software is shown in Figure 1. The PEP is located between an internal network and an external network, and an IDS server and a management server are located in the internal Network The IDS server determines occurrence of an illegal action and an attack according to information collected by the IDS detector and reports to the management server and the PEP of the illegal action and the attack, and the PEP takes appropriate measures to block an attack source or a target user, or put the attack or the target user into a blackest A primary function of the IDS is to analyze a data stream through monitoring, so as to discover an intrusion action (for example, an attempt to pry into the structure of the internal network, an attack on the internal server, etc.). The PEP provides a joint operation interface to a third-party IDS software. When detecting an abnormity or an attack action, the IDS server sends information to the PEP via the interface, and the PEP will take appropriate measures (for example, putting the user into a blacklist, etc.).

At present, typically, a joint operation of a PEP and an IDS software is implemented through a network management: no direct interface is provided between the IDS software and the PEP, and all the operations are accomplished via the network management. The IDS server reports to the network management of the occurrence of an intrude action with the Simple Network Management Protocol (SNMP), the manager sends a message to the PEP via a network management system, and responds to the intrude action via the PEP; the response is, for example, to set an Access Control List (ACL) rule for blocking, or put the attack source or the target user into a blacklist, etc. Such joint operation mode requires the support by the network management. In many scenarios, no uniform network management is provided to manage the PEP and the IDS software.

### Summary of the Invention

According to an embodiment of the invention, a PEP, and a method and system for joint operation of the PEP and an IDS are provided to implement the secure and efficient joint operation of the PEEP and the IDS.

According to an embodiment of the invention, a method for joint operation of a PEP and an IDS is provided, including:

establishing a direct joint operation connection between the IDES and the PEP;

maintaining a communication between the PEP and the IDS;

detecting, by the IDS, an attack action, and sending a detection result to the PEP; and

performing, by the PEP, a corresponding operation according to the detection result.

According to an embodiment of the invention, a PEP is provided, including:

a communication module adapted for establishing a direct joint operation connection to an IDS and maintaining a communication with the IDS, and receiving a detection result sent by the IDS and notifying an execution module of the detection result; and

the execution module adapted for performing a corresponding operation according to the detection result.

According to an embodiment of the invention, an IDS is provided, comprising:

a detection unit adapted for detecting an attack action; and

a communication unit adapted for establishing a direct joint operation connection to a PEP and maintaining a communication with the PEP, and sending a detection result from the detection unit to the PEP.

In the solutions provided by the embodiments of the invention, message exchange is based upon a TCP connection. The message format is private, and the IDS software cannot establish a connection to and operate jointly with a PEP through other protocols for joint operation. One protocol packet carries only one message. If an attack of an impersonated protocol packet occurs, the TCP connection may be disconnected; in this case, a connection is to be reestablished.

With the use of the solutions provided according to the embodiments of the invention, the security and defense capability of the IDS are improved, thereby preventing effectively a dummy message and various other attacks; and efficient joint operation can be implemented, so that the overall defense capability of the security product can be improved.

### Brief Description of the Drawings

Figure 1 is a structural schematic diagram of a typical networking of a PEP and an IDS for joint operation;

Figure 2 is a schematic diagram showing the process of joint operation of a PEP and an IDS according to an embodiment of the invention; and

Figure 3 is a flow chart showing the process of protocol messages for joint operation of a PEP and an IDS according to an embodiment of the invention.

### Detailed Description of the Embodiments

For better understanding of the technical principles, characteristics and advantages of the invention by those skilled in the art, the invention will now be described in detail in connection with the embodiments.

A schematic diagram showing the process of joint operation of a PEP and an IDS according to an embodiment of the invention is shown in Figure 2. As shown in Figure 2, a method for joint operation of the PEP and the IDS are provided, and the method includes the following steps:

a direct joint operation connection is established between the IDS and the PEP;

a communication between the PEP and the IDS is maintained;

an attack action is detected by the IDS, and a detection result is sent to the PEP; and

the PEP performs a corresponding operation according to the detection result.

Moreover, the process for establishing a direct joint operation connection between the PEP and the IDS includes at least the following steps:

Step 01: The IDS software initiates a request for establishing a joint operation connection, with information related to the IDS software being carried in the request;

Step 02: The PEP checks the information related to the IDS software mentioned above and determines whether the joint operation connection is permitted, and if the connection is not permitted, the method proceeds with Step 03; and if the request is permitted, the method proceeds with Step 04;

Step 03: The PEP sends a joint operation connection rejected message and disconnects the Transmission Control Protocol (TCP) connection; and

Step 04: The PEP sends a joint operation connection response message;

The process for maintaining the communication between the PEP and the IDS includes at least the following steps;

Step 11: A "keep alive" message is sent periodically between the PEP and the IDS software, to indicate that both the PEP and the IDS are in an activated state;

Step 12: After the joint operation connection is established successfully, joint operation data sent by the IDS software is received by the PEP.

The process in which the PEP and the IDS process an attack includes at least the following steps:

Step 13: If discovering an attack during a normal connection, the IDS sends joint operation data to the PEP for requesting a block;

Step 14: The PEP performs the corresponding operation according to the joint operation data, and responds with a block result;

Step 15: Either of the PEP and the IDS disconnect the TCP connection to release the joint operation connection.

The connection request message sent in Step 01 includes IDS type, IDS version, encryption mode, version number of the joint operation protocol, and data for authentication that is obtained according to the encryption mode.

In the embodiments of the invention, message exchange is based upon a TCP connection. The message format is private, and the IDS software cannot establish a connection to and operate jointly with a PEP through other protocols for joint operation. One protocol packet carries only one message, if an attack of an impersonated protocol packet occurs, the TCP connection may be disconnected; in this case, a connection is to be reestablished.

Correspondingly, according to an embodiment of the invention, a PEP is further provided, including:

a communication module adapted for establishing a direct joint operation connection to an IDS maintaining a communication with the IDS, and receiving a detection result sent by the IDS and notifying an execution module of the detection result; and

the execution module adapted for performing a corresponding operation according to the detection result.

Moreover, the connection module further includes a checking module adapted for checking the received connection request message according to the IDS type, the IDS version, the encryption mode, the version number of the joint operation protocol and authentication data, and if the check is passed, the joint operation connection is permitted; otherwise, the joint operation connection is rejected.

A TCP connection is first established between the connection module and the IDS. Through the TCP connection, a message related to the joint operation connection, such as a joint operation connection request message, a rejection message, etc., is sent or received.

Correspondingly, according to an embodiment of the invention, an IDS is further provided, including:

a detection unit adapted for detecting an attack action; and

a communication unit adapted for establishing a direct joint operation connection to a PEP and maintaining a communication with the PEP, and sending a detection result from the detection unit to the PEP.

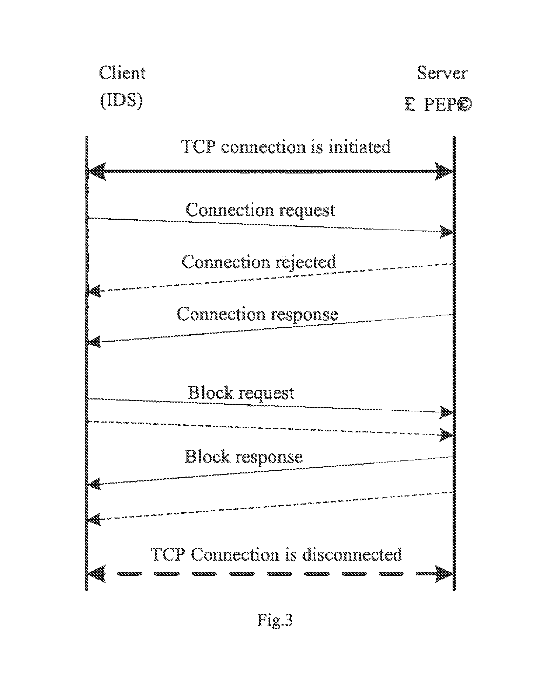

The process flow of protocol messages for joint operation of a PEP and an IDS according to an embodiment of the invention is as shown in Figure 3.

The IDS acting as a client interacts with the PEP acting as a server via a TCP connection.

The specific process of the interaction is described above and will not be described again hereinafter.

In the solution according to an specific embodiment of the invention, the message format is as follows:

1) A connection request (Connect req.) message, as shown in Table 1:

**Table 1**

| | | | | | |
|---|---|---|---|---|---|
| 0 | 7 | 15 | | 31 | |
| | Message Type | Version | Reserved | Length | Reserved |
| | IDS Type | IDS Version | Encryption Mode | Port | |
| | Authentication Data | | | | |

Message type: a connection request message, with a value of 1;
Version: a version number of joint operation protocol, with a value of 1.0;
Length: a packet length;
IDS type: the type of the IDS software; IDS version: a version number of the IDS software;
Encryption Mode: with a value of 0 indicating no encryption, and a value of 1 indicating encryption with the MD5 algorithm;
Port; a version number of the joint operation protocol processed by the IDS software, with a value of 0xffff indicating that the version number is consistent with that at the PEP side;
Authentication Data: data for authentication (data obtained according to the encryption mode).

2) A connection reject (Connect rej.) message, as shown in Table 2:

**Table 2**

| | | | | | |
|---|---|---|---|---|---|
| 0 | 7 | 15 | | | 31 |
| | Message Type | Version | Reserved | Length | Reserved |

Message type: a connection reject message, with a value of 2;
Version: a version number of the joint operation protocol, with a value of 1.0;
Length: a packet length, with a value of 4 (bytes).

3) A connection response (Connect resp.) message, as shown in Table 3:

**Table 3**

| | | | | | |
|---|---|---|---|---|---|
| 0 | 7 | 15 | | | 31 |
| | Message Type | Version | Reserved | Length | Reserved |
| | Firewall Type | Firswall Version | Reserved | | |

Message type: a connection response message, with a value of 3; Version: a version number of the Joint operation protocol, with a value of 1.0; Length: a packet length, with a value of 8 (bytes);
PEP type: type of the PEP; PEP Version: a version number of the PEP.

4) A block request (Block req.) message, as shown in Table 4:

**Table 4**

| | | | | | | |
|---|---|---|---|---|---|---|
| 0 | 7 | 15 | | | | 31 |
| | Message Type | Version | Reserved | | Length | Reserved |
| | Sequence Number | | | | | |
| | Source IP Address | | | | | |
| | Source IP Address Mask | | | | | |
| | Destination IP Address | | | | | |
| | Destination IP Address Mask | | | | | |
| | Source Port | | | | Destination Port | |
| | Protocol Type | Action Indication | | * | Reserved | |
| | Time Value | | | | | |

| | | | | | | |
|---|---|---|---|---|---|---|
| *: Whether a response is required | | | | | | |

Message type: a block request message, with a value of 4; Version: a version number of the joint operation protocol, with a value of 1.0; Length: a packet length;
Sequence Number: an identity of the current packet content, which is used for indicating whether the current block request is executed successfully or not when the PEP responds, with a value of 0xffffffff indicating that the current message cannot be indicated by the sequence number when the PEP responds, instead, the content information of the message must be carried;
Source IP address: a source IP address, which is a value of 32 bits;
Source IP address mask: a source IP address mask, which is a value of 32 bits;
Destination IP Address: a destination IP address, which is a value of 32 bits;
Destination IP Address Mask: a destination IF address mask, which is a value of 32 bits;
Source Port: a source port number, which is a value of 0 if the protocol type is 0 or Internet Control Message Protocol (ICMP);
Destination Port: a destination port number, which is a value of 0 if the protocol type is 0 or ICMP;
Protocol Type: with a value of 0 representing all protocols;
Action Indication: an indication of the particular action (such as blocking the source IP address, blocking the destination IP address and blocking both the source IP address and the destination IP address) of the block request;
wether a response is required: with a value of 0 indicating that the PEP is not required to respond, and a value of 1 indicating that the PEP is required to respond;
Time value: block duration, with a value of 0 indicating that the block is released (according to the corresponding action indication), and a value of 0xffffffff indicating that the block lasts.

5) A block response (Block resp.) Message, as shown in Table 5:

**Table 5**

| | | | | | |
|---|---|---|---|---|---|
| 0 | 7 | 15 | | 31 | |
| 1 | Message Type | Version | Reserved | Length | Reserved |
| 2 | Sequence Number | | | | |
| 3 | Source IP Address | | | | |
| 4 | Source IP Address Mask | | | | |
| 5 | Destination IP Address | | | | |
| 6 | Destination IP Address Mask | | | | |
| 7 | Source Port | | | Destination Port | |
| 8 | Protocol Type | Action Indication | Resp-onse | Reserved | |

Message type: a block response message, with a value of 5; Version: a version number of the joint operation protocol, with a value of 1.0; Length: a packet length;
Sequence Number: for which the sequence number in the received Block req. is used, if the value of the Sequence Number is not 0xffffffff, then only fields 1, 2 and 8 exist, and only the "Response" in the field 8 is used; and if the value is 0xfffffff, fields 1-8 exist;
Source IP address: which is the Source IP address in the Block req., and is a value of 32 bits; Source IP address mask: which is the Source IP address mask in the Block req., and is a value of 32 bits;
Destination IP Address: which is the destination IP address in the Block req., and is a value of 32 bits; Destination IP Address Mask: which is the destination IP address mask of the Block req., and is a value of 32 bits;
Source port: which is the source port number in the Block req.; Destination Port: which is the destination port number in the Block req.; Protocol Type: which is the protocol type in the Block req.;
Action Indication: which is the action indication in the Block req.;
Response: with a value of 0 indicating that the PEP executes with a success, and a value of 1 indicating that the PEP executes with a failure.

6) A "Keep Alive" Message

A "keep alive" message is sent periodically between a PEP and an IDS software, to indicate that both the PEP and the IDS software are in an activated state; the TCP connection shall be disconnected and the corresponding resources shall be released if no "keep alive" message is received from the opposite party. The format of the "keep alive" message is as follows, as shown in Table 6:

**Table 6**

| | | | | |
|---|---|---|---|---|
| 0 | 7 | 15 | | 31 |
| | 0 | | 0xffffff | |

It can be seen from the above solutions according to the embodiments of the invention that the message exchange is based upon a TCP connection. The message format is private, and the IDS software cannot establish a connection to and operate jointly with a PEP through other protocols for joint operation. One protocol packet carries only one message. If an attack of an impersonated protocol packet occurs, the TCP connection may be disconnected, in this case, a connection is to be reestablished, Therefore, the security and defense capability of the IDS are improved, thereby preventing effectively a dummy message and various other attacks; and efficient joint operation can be implemented, so that the overall defense capability of the security product can be improved.

The above embodiments are merely illustration and explanation of the solutions in the invention. It will be appreciated that the invention is not limited to this. Various alternations and modifications to the invention can be made by those skilled in the art without departing from the spirit and scope of the invention, and all these alternations and modifications are intended to be within the protection scope of the invention.

## Claims

1. A method for joint operation of a Policy Enforcement Point and an Intrude Detection System, comprising:
establishing a direct joint operation connection between the Intrude Detection System and the Policy Enforcement Point;
maintaining, a communication between the Policy Enforcement Point and the Intrude Detection System;
detecting, by the Intrude Detection System, an attack action, and sending a detection result to the Policy Enforcement Point; and
performing, by the Policy Enforcement Point, a corresponding operation according to the detection result

2. The method according to claim 1, further comprising:
establishing first a TCP connection between the Intrude Detection System and the Policy Enforcement Point, and sending or receiving directly a message related to the joint operation connection via the TCP connection,

3. The method according to claim 2, wherein, the establishing a direct joint operation connection between the Intrude Detection System and the Policy Enforcement Point comprises:
initiating, by the intrude Detection System, a request for establishing the joint operation connection, and carrying information related to the Intrude Detection System in the sent connection request message;
checking, by the Policy Enforcement Point, the information related to the Intrude Detection System, if the connection request is not permitted, the Policy Enforcement Point sends a connection rejected message and disconnects the TCP connection; and if the connection request is permitted, the Policy Enforcement. Point sends a connection succeeded message.

4. The method according to claim 3, wherein, the sent connection request message comprises:
a software type, a software version, an encryption mode, a version number of joint operation protocol, and data for authentication of the Intrude Detection System, and the data for authentication is encrypted.

5. The method according to claim 3, wherein, the format of the connection request message is private.

6. The method according to claim 3, wherein, during the sending or receiving the message related to the joint operation connection via the TCP connection, only one message is carried in one protocol packet.

7. The method according to claim 1 or 2, wherein, the maintaining the communication between the Policy Enforcement Point and the Intrude Detection System comprises,
sending periodically a "keep alive" message between the Policy Enforcement Point and the Intrude Detection System, so that both the Policy Enforcement Point and the Intrude Detection System are in an activated state; and
receiving, by the Policy Enforcement Point, joint operation data sent from the Intrude Detection System, after the joint operation connection is established successfully.

8. The method according to claim 1 or 2, wherein, the detecting an attack and sending the detection result by the intrude Detection System comprises:
sending a block request to the Policy Enforcement Point when the Intrude Detection System detects an attack; and
the performing the corresponding operation by the Policy Enforcement Point comprises:
blocking, by the Policy Enforcement. Point, the attack according to the block request.

9. A Policy Enforcement Point, comprising:
a communication module adapted for establishing a direct joint operation connection to an Intrude Detection System and maintaining a communication with the intrude Detection System, and receiving a detection result sent by the Intrude Detection System and notifying an execution module of the detection result; and
an execution module adapted for performing a corresponding operation according to the detection result.

10. The Policy Enforcement Point according to claim 9, herein, a TCP connection is first established between the connection module and the Intrude Detection System, and a message related to the joint operation connection is sent or received via the TCP connection.

11. The Policy Enforcement Point according to claim 9, further comprising a checking module adapted for checking the received connection request message according to the a software type, a software version, an encryption mode, a version number of joint operation protocol and authentication data of the Intrude Detection System, if the check is passed, the joint operation connection is permitted; otherwise, the joint operation connection is rejected.

12. An Intrude Detection System, comprising:
a detection unit adapted for detecting an attack action; and
a communication unit adapted for establishing a direct joint operation connection to a Policy Enforcement Point and maintaining a communication with the Policy Enforcement Point, and sending a detection result from the detection unit to the Policy Enforcement Point.
